# EUROPEAN PATENT SPECIFICATION

(11) **EP 4 442 536 B1**
(45) Date of publication and mention of the grant of the patent: **09.09.2026**
(21) Application number: 23167005.0
(22) Date of filing: 06.04.2023
(51) Int. Cl.: B62B 7/10, B62B 7/12

(54) **FRAME ASSEMBLY FOR WHEELED CARRIAGE, BIKE TRAILER, STROLLER, AND MULTI-FUNCTIONAL CARRIAGE**
RAHMENANORDNUNG FÜR ROLLWAGEN, FAHRRADANHÄNGER, KINDERWAGEN UND MULTIFUNKTIONSWAGEN
ENSEMBLE CADRE POUR CHARIOT À ROUES, REMORQUE À VÉLO, POUSSETTE ET CHARIOT MULTIFONCTIONNEL

(43) Date of publication of application: 09.10.2024
(73) Proprietor: HTS Hans Torgersen & Sønn AS, 3535 Krøderen (NO)
(72) Inventor: MONKEN, Olavo Pena, 3514 HD Utrecht (NL); VAN TONGEREN, Jeroen Bastiaan, 3833 JP Leusden (NL); LUIJER, Jasper Adriaanszoon, 1223 CG Hilversum (NL); VAN DER LEEUW, Jesse, 1072 AH Amsterdam (NL)
(74) Representative: Meissner Bolte Partnerschaft mbB

(56) References cited:
- WO-A1-2014/169501
- TW-B- I 289 124
- US-A- 5 577 746
- US-B1- 7 387 310

## Description

### TECHNICAL FIELD

This invention relates to a frame assembly for wheeled carriages such as strollers and bike trailers. The present invention may particularly be advantageous in application to carriages for pets such as dogs and cats.

### BACKGROUND ART

Various wheeled carriages for transport of one or more children or pets are available on market. A wheeled carriage that is pushed with human hands is called a stroller, including a jogger stroller. Another wheeled carriage that has a hitch system and towed by bicycle is called a bicycle trailer or bike trailer. Many of these, such as described, for example, in documents US 7387310 B1, US 5577746 A, TWI 289124 B or WO 2014/169501 A1, are foldable or collapsible. Figure 1 shows a conventional foldable carriage. This carriage has a bottom frame, a pair of side frames hinged to the bottom frame, and one or more crossbars arranged between the pair of side frames to the side frames at the unfolded position. These crossbars are configured to be removable. For folding the carriage, the crossbars need to be removed, and the side frames thereafter need to be folded onto the bottom frame around the hinges. To unfold, the reverse operation is required. Such operations are cumbersome.

Conventional carriages have a relatively high seating or floor position for children or pets. Many carriages have floor positions that are above the axles of the main wheels. Even the carriages having the lowest floor position have the floor at the same height as the axles of the main wheels. Typically, the main wheels, especially the rear wheels, have a relatively large diameter, resulting in a relatively high floor position. This may prevent children and pets from accessing the seat or floor on their own. Further, the high centre of gravity position would also worsen the stability of the carriage when traveling, increasing the risk of overturning.

Moreover, conventional carriages have an entrance only at the front. This means that pets, such as dogs, have to turn around in the compartment after entering from the front. The compartment therefore requires a high vertical space, i.e., a high ceiling position, that allows the pet to turn around there-inside. This, in connection with the high floor position described above, would result in a higher centre of gravity for the carriage. Needless to say, this could further worsen the stability of the wheeled carriage when traveling.

### SUMMARY

The object of the invention is therefore to provide respective solutions for one or some of the aforementioned drawbacks in the conventional frame system for wheeled carriages. It should be noted, however, that these solutions involve unique technical features that are independent from each other, and may thus deserve independent protection. Nevertheless, combination of these solutions may further be combined with each other to produce other embodiments.

The present invention (hereinafter referred to as "first solution") is directed to easy and quick folding, whilst allowing for a passenger to access from the side. Specifically, a frame assembly for wheeled carriage, according to the solution, comprises: a bottom frame having a front end and a rear end; an upper frame having a front end and a rear end; a joint pivotally coupling the rear end of the upper frame and the rear end of the bottom frame so that the upper frame rotates around an axis of the joint and between a first position and a second position with respect to the bottom frame; a pillar extending from the bottom frame from a position between the front end and the rear end of the bottom frame, toward the upper frame between the front end and the rear end of the upper frame, at least part of the pillar being rotatable with respect to the bottom frame; a link coupling the pillar and the upper frame so as to rotate the upper frame around the axis of the joint when the pillar is rotated; and a locking means for releasably locking an orientation of the pillar, an orientation of the upper frame and/or an orientation of the link, such that the upper frame is maintained in the first position.

Preferable embodiments of the invention are given in the dependent claims as appended.

Another solution, not forming part of the claimed invention, (hereinafter referred to as "second solution") is directed to a frame assembly with a low centre of gravity. Specifically, the frame assembly for wheedled carriage, according to the second solution, comprises a bottom frame, wherein the bottom frame comprises a first frame section and a second frame section, at least part of the second frame section being located below the first frame section, and wherein the second frame section supports a seat or floor for passenger.

Yet another solution, not forming part of the claimed invention, (hereinafter referred to as "third solution") is directed to a frame assembly with a rear entrance. The frame assembly of the third solution comprises a pair of side frames, but no cross member spans between the side frames at the rear end of the frame assembly.

As mentioned above, two or more of the first to third solutions may be combined with each other to produce other embodiments.

### BRIEF DESCRIPTION OF THE DRAWINGS

The principle of the invention will now be more fully described by way of example with reference to the accompanying drawings. The same reference numbers may be used in different drawings to identify the same or similar elements.

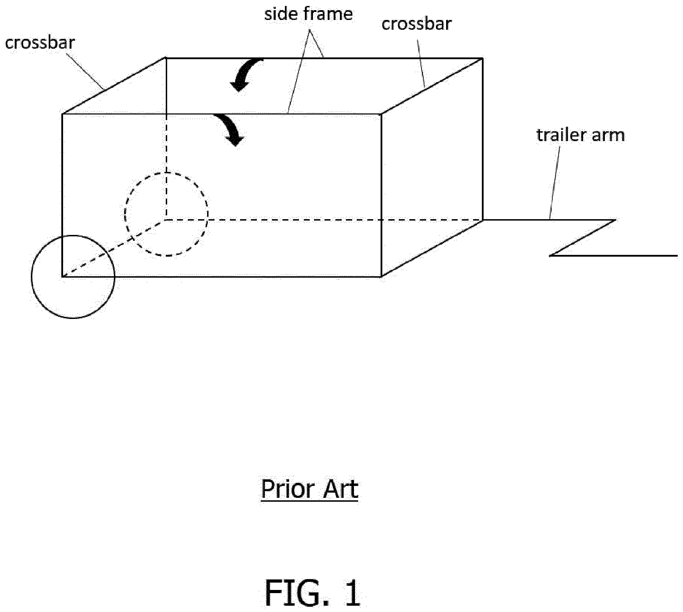

Figure 1 illustrates a conventional bike trailer for pets.
Figure 2 shows a perspective view of a frame assembly for wheeled carriage according to the invention.
Figure 3 shows a front view of the frame assembly of figure 2.
Figure 4 shows a rear view of the frame assembly of figure 2.
Figure 5 shows a plan view of the frame assembly of figure 2.
Figure 6 shows a side view of the frame assembly of figure 2.
Figure 7 shows a perspective view of the frame assembly of figure 2 during folding.
Figure 8 shows a side view of the frame assembly of figure 2 during folding.
Figure 9 shows another exemplarily frame assembly according to the invention.

### DETAILED DESCRIPTION

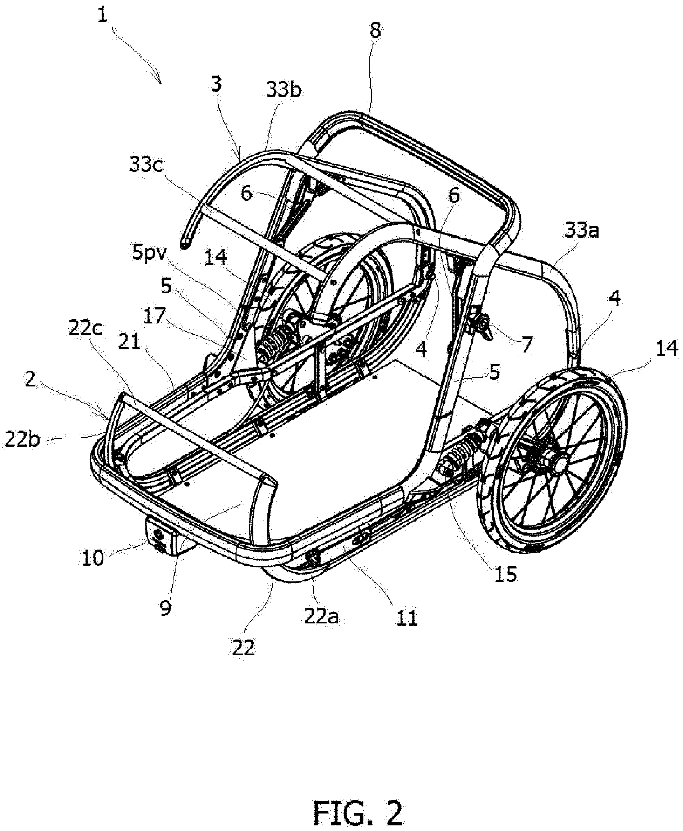

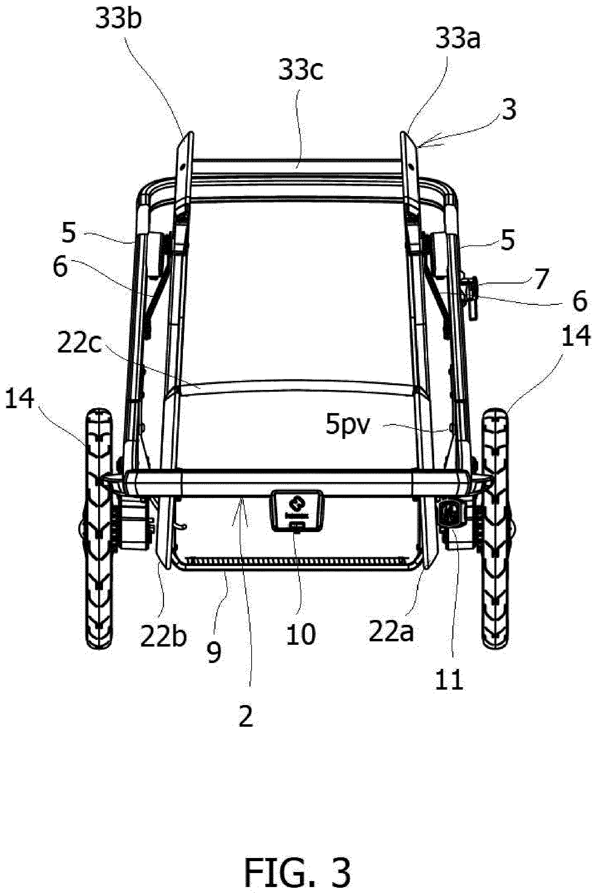

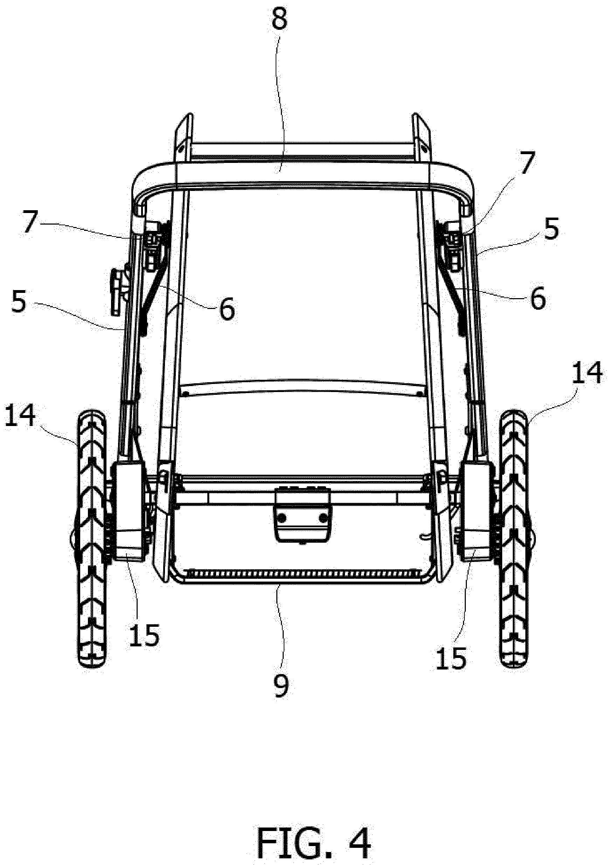

Referring to figures 2 to 6, a frame assembly 1 for wheeled carriage according to the present invention is shown. The frame assembly 1 at least comprises a bottom frame 2. The bottom frame 2 has a first end and a second end in the traveling direction of the frame assembly 1 or wheeled carriage. According to the invention, the first end is a front end, and the second end is a rear end. The frame assembly 1 as depicted is for a multi-functional wheeled carriage that comprises both an attachment 10 for a stroller wheel or front wheel and an attachment 11 for a trailer arm. However, another frame assembly 1 according to the invention may either comprise the attachment 10 for stroller wheel or the attachment 11 for trailer arm. These attachments 10, 11 are mounted on the bottom frame 2. However, the positions of the attachments are not limited.

A pair of main or rear wheels 14 may be mounted on the bottom frame 2, preferably via suspensions 15 providing some dampening of movement or shock absorption. The attachment of the main wheels 14 to the bottom frame 2 or suspension system 15 may be realised via a quick release system. Specifically, a hub of the main wheel 14 and an axle to be connected to the hub may be secured to each other via a releaseable engagement. This engagement may be released, for example, by pressing a button arranged on or inside the hub. The suspension 15 may be a shock absorber suspension comprising a spring. The shock absorber suspension may be adjustable in damping force by varying the pre-load of the spring.

Optionally, a braking means may be provided in relation to the main wheels 14. The braking means may be in the form of a hub brake, rim brake and/or disc brake.

For a low-floor design, the bottom frame 2 may comprise a first frame section 21 and a second frame section 22, at least part of the second frame section 22 being located below the first frame section 21. The second frame section 22 may support a seat or floor 9 for a passenger or pet. The pair of main wheels 14 may be attached to the first frame section 21, preferably via the aforementioned suspensions 15.

In the illustrated example, the first frame section 21 may have a U-shape in plan view. The second frame section 22 may have a pair of sidebars 22a, 22b each having a C-shape in side view, as well as one or more crossbars 22c connecting these sidebars 22a, 22b.

The first frame section 21 and the second frame section 22 may at least partially overlap with each other in plan view. The first frame section 21 and the second frame section 22 are fixed with each other.

In the illustrated example, the floor 9, preferably in the form of a flat board, is arranged between the lower parts of the pair of sidebars 22a, 22b of the second frame section 22. Preferably, the axle of each wheel 14 is located between the first and second frame sections 21, 22 in the height direction of the frame assembly 1, allowing the low-floor 9 design, whilst employing the suspension system 15. The suspension may be mounted on the first frame section. The seat or floor 9 may be located below the axles of the main wheels 14.

The frame assembly 1 may comprise an upper frame 3. The upper frame 3 also has a first end and a second end in the traveling direction of the frame assembly 1. According to the invention, the first end is a front end, and the second end is a rear end. Preferably, the upper frame 3 is shaped such that the height of the compartment for passenger increases towards the front end of the frame assembly 1. This design is particularly suitable for wheeled carriage for quadrupeds, such as dogs, because they have a greater height in the front than the rear.

In the illustrated example, the upper frame 3 has a pair of sidebars 33a, 33b each having a C-shape in side view, as well as one or more crossbars 33c connecting these sidebars 33a, 33b. The second or rear ends of the sidebars 33a, 33b of the upper frame 3 and the second or rear ends of the sidebars 22a, 22b of the bottom frame 2 may be coupled via joints 4. Each joint 4 pivotally couples the second end of the upper frame 3 and the second end of the bottom frame 2 so that the upper frame 3 rotates around an axis of the joint 4 and between a first position and a second position with respect to the bottom frame 2. In the first position of the upper frame 3, the frame assembly 1 may be unfolded, and in the second position of the upper frame 3, the frame assembly 1 may be folded.

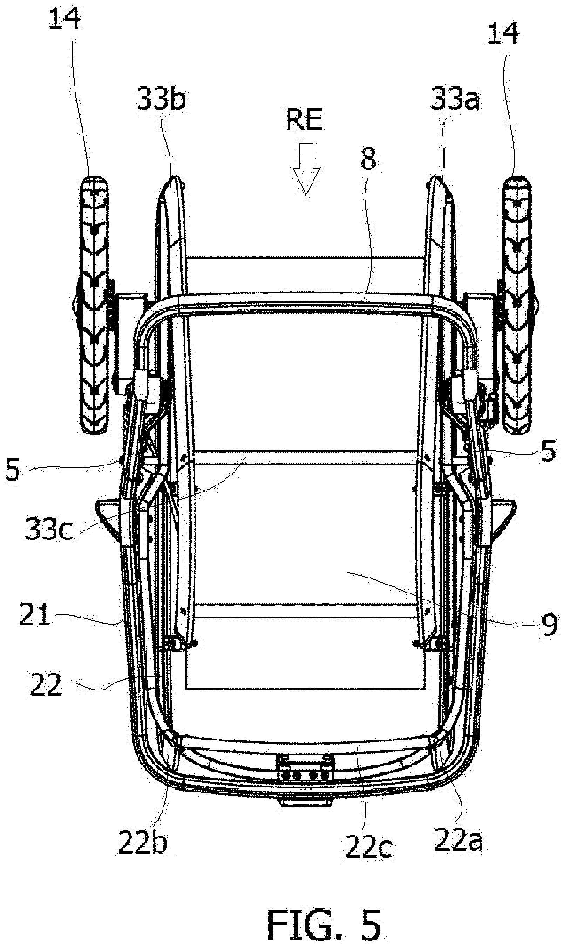

For passenger or pet access from the rear of the frame assembly 1, there may be no cross member between a pair of side frames at the rear of the frame assembly 1. In the illustrated example, the pair of side fames comprise the sidebars 33a, 33b of the upper frame 3 and the sidebars 22a, 22b of the bottom frame 2. As such, a rear entrance RE may be provided as required, as shown in figure 5.

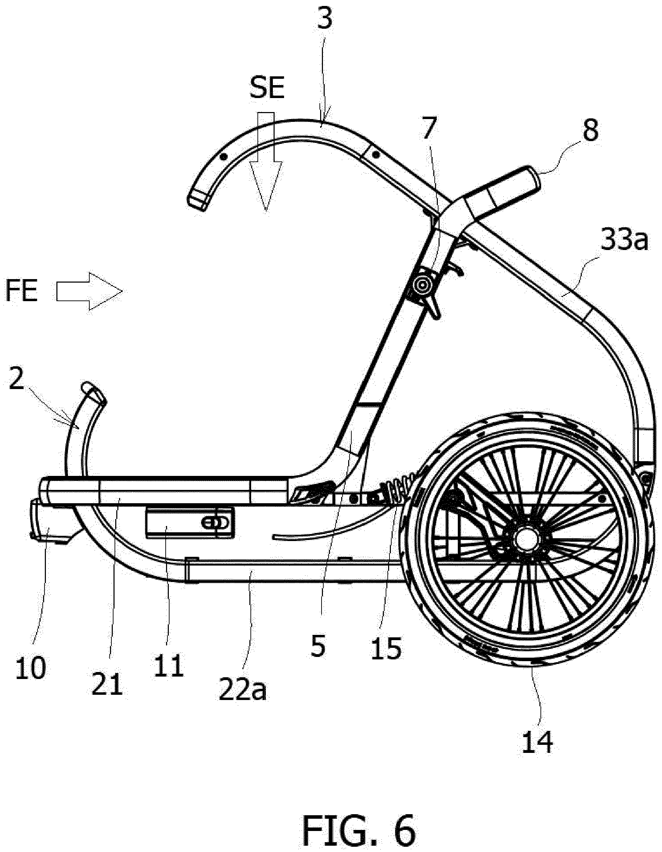

The frame assembly 1 may comprise a pillar 5. For passenger or pet access from the side of the frame assembly 1, the pillar 5 may extend from the bottom frame 2 from a position between the first end (e.g., front end) and the second end (e.g., rear end) of the bottom frame 2, toward the upper frame 3 between the first end (e.g., front end) and the second end (e.g., rear end) of the upper frame 3. One or two side entrances SE for passenger may be provided as required, as shown in figure 6. Alternatively or additionally, a front entrance FE may be formed at the front.

At least part (e.g., upper part) of the pillar 5 may be rotatable with respect to the bottom frame 2 around a pivot point 5pv. In the illustrated example, the pivot point 5pv is located within the extension of the pillar 5. More specifically, the pivot point 5pv is located above the point where the pillar 5 and the bottom frame 2 meet. This arrangement allows a minimum or no protrusion of the pillar 5 over the front edge of the main body in the folded position of the upper frame 3, thereby reducing the total length of the frame assembly 1 when folded. As shown in figure 2, the lower part of the pillar 5 (i.e., the portion below the pivot point 5pv) is fixed to the first frame section 21 of the bottom frame 2 via a bracket 17. However, the lower end of the pillar 5 may be integrally formed with the bottom frame 2.

Alternatively, the pivot point 5pv may be located at the lower end of the pillar 5, i.e. between the pillar 5 and the bottom frame 2.

In a more favourable example as shown in figure 6, the pillar 5 in the first position or upright position is inclined towards the rear. This facilitates user access to the pillar 5 from the rear side, particularly when folding the frame assembly 1.

The frame assembly 1 may further comprise a link 6 coupling the pillar 5 and the upper frame 3 so as to rotate the upper frame 3 around the axis of the joint 4 when the pillar 5 is rotated around the pivot point 5pv. One end of the link 6 may be rotatably connected to the pillar 5 and the other end of the link 6 may be rotatably connected to the upper frame 3. The link 6 links the rotational movement of the pillar 5 (tilt movement) to the rotational movement of the upper frame 3. Rotating the pillar 5 around the pivot point 5pv causes folding and unfolding of the frame assembly 1 via the link 6.

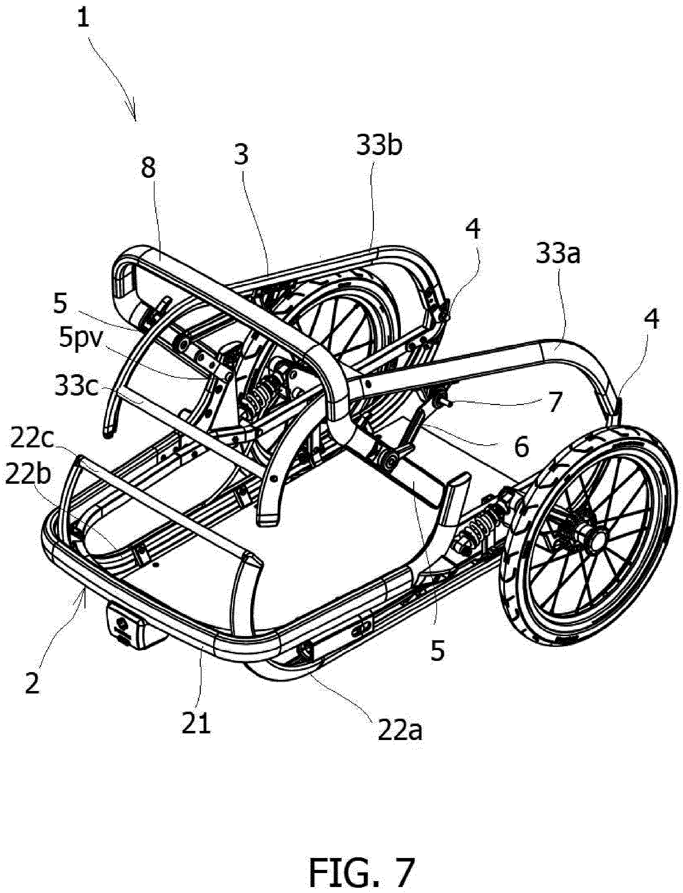

The frame assembly 1 may further comprise a locking means 7 for releasably locking an orientation of the pillar 5, an orientation of the upper frame 3 and/or an orientation of the link 6 with respect to all of the items, including the frame assembly, such that the upper frame 3 is maintained in the first position or unfolded position. Since the upper frame 3, the pillar 5 and the link 6 are connected to each other, by locking the position of at least one of these, the orientation of the upper frame 3 can successfully be retained at the first or unfolded position. The locking means 7 may comprise a first part and a second part that engage with each other. The first part may be located on the upper frame 3 or link 6 and the second part may be located on the pillar 5. In one example, the first part may be a protrusion or pin located on the upper frame 3, and the second part may be a corresponding receptacle located on the pillar 5. The opposite arrangement is of course possible. The pin of the locking means 7 arranged on the upper frame 3 can be seen in figure 7 as an example. The receptacle may have a retainer such as a latch or a claw. The retainer may be springloaded in the direction of retaining the protrusion or pin in the receptacle. When the retainer is operated by user against the spring force, the protrusion or pin can be released from the receptacle. In another example, the receptacle may be a hole that accepts the protrusion or pin.

Alternatively, the locking means 7 may be configured to releasably lock the rotation of the link 6 with respect to the pillar 5 and/or to the upper frame 3.

Alternatively, the locking means 7 may be configured to lock the rotation of the pillar 5 around the pivot point 5pv described above.

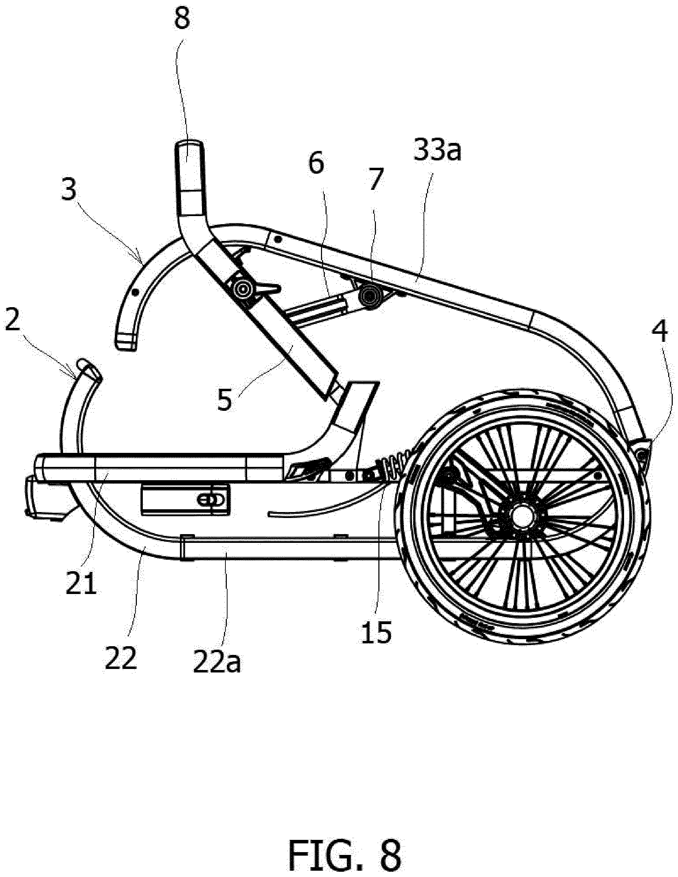

As such, when the locking is released and the pillar 5 is rotated from its first position to its second position as shown in figures 7 and 8, the link 6 causes rotation of the upper frame 3 as well from its first position to its second positon, and vice versa.

In the illustrated example, the frame assembly 1 comprises a second pillar 5, and each of the pillar 5s being located on a respective side of the frame assembly 1. A handle 8 may be provided to span between these pillars 5. The handle 8 may extend rearwards from the pillar 5 for easy access by user.

Alternatively, the frame assembly 1 has only one pillar 5. The pillar 5 may only be provided on the right or left side of the frame assembly 1. A handle 8 may be connected to the upper end of the pillar 5.

In the illustrated frame assembly 1 according to the first solution, when the pillar 5 is rotated from its first position or upright position towards the front and further to the bottom frame 2, the link 6 connecting the pillar 5 to the upper frame 3 also rotates, causing the upper frame 3 to rotate around the axis of the joint 4 towards its second position or folded position, and vice versa. In the unfolded state, a side opening is defined by the upper frame 3, the bottom frame 2 and the pillar 5. In this way, the frame assembly 1 can be folded and unfolded in an easy and quick way, whilst allowing formation of one or two side entrance(s) SE for passenger. The unfolded state can be retained by the locking means 7.

In the illustrated frame assembly 1 according to the second solution, since the seat or floor 9 for passenger or pet is arranged below the first frame section 21 of the bottom frame 2, the low-floor design and thereby the low centre of gravity arrangement, can be achieved. Passengers, especially pets, can easily get in and out of the carriage by themselves, i.e., without the assistance of a companion. Further, the low-floor design improves the stability of the wheeled carriage when traveling.

In the illustrated frame assembly 1 according to the third solution, since there is no crossbar on the rear side of the frame assembly 1, a rear entrance RE can potentially be provided. Passengers, especially pets, can get in the wheeled carriage from the rear entrance RE. If a front entrance FE is also provided, passengers, especially pets, can get the wheeled carriage from the rear side and get out from the front side - rear-in and front-out structure. Furthermore, the combination of the first and third solutions improves the flexibility in entrance arrangement.

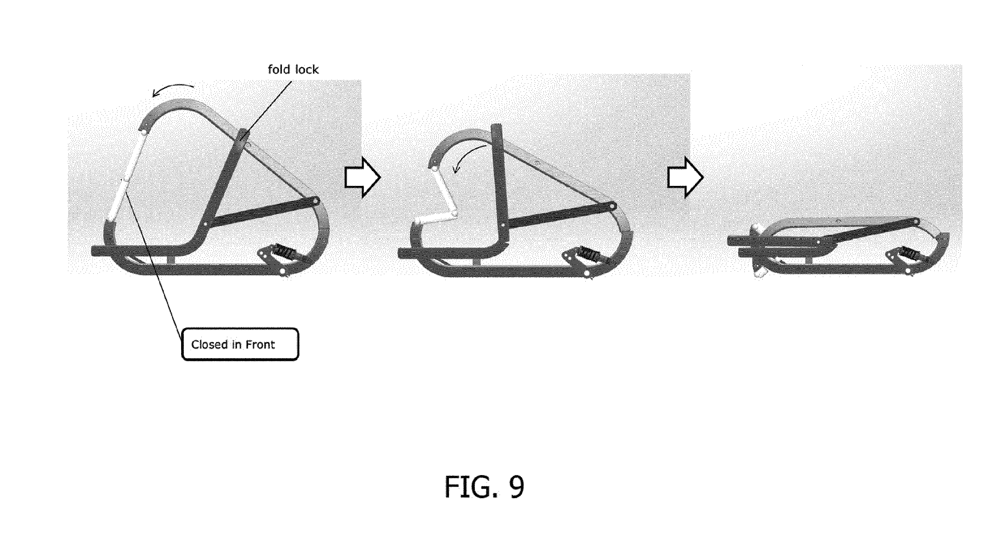

In another example as shown in figure 9, the front of the frame assembly 1 may be closed by a foldable bar or plate. For example, the front of the frame assembly 1 may be covered by a collapsible transparent shield.

### LIST OF REFERENCE NUMERALS

- 1: frame assembly
- 2: bottom frame
- 3: upper frame
- 4: joint
- 5: pillar
- 6: link
- 7: locking means
- 8: handle
- 9: floor
- 10: attachment for stroller wheel
- 11: attachment for trailer arm
- 14: main wheel
- 15: suspension
- 21: first frame section of bottom frame
- 22: second frame section of bottom frame
- 22a, 22b: sidebar
- 22c: crossbar
- 33a, 33b: sidebar
- 33c: crossbar

## Claims

1. A frame assembly (1) for wheeled carriage, comprising:
a bottom frame (2) having a front end and a rear end;
an upper frame (3) having a front end and a rear end;
a joint (4) pivotally coupling the rear end of the upper frame (3) and the rear end of the bottom frame (2) so that the upper frame (3) rotates around an axis of the joint and between a first position and a second position with respect to the bottom frame (2);
a pillar (5) extending from the bottom frame (2) from a position between the front end and the rear end of the bottom frame, toward the upper frame (3) between the front end and the rear end of the upper frame (3), at least part of the pillar (5) being rotatable with respect to the bottom frame (2);
a link (6) coupling the pillar (5) and the upper frame (3) so as to rotate the upper frame (3) around the axis of the joint (4) when the pillar (5) is rotated; and
a locking means for releasably locking an orientation of the pillar (5), an orientation of the upper frame (2) and/or an orientation of the link (6) such that the upper frame (3) is maintained in the first position,
wherein, in the first position of the upper frame (3), the frame assembly (1) is unfolded, and in the second position of the upper frame (3), the frame assembly (1) is folded.

2. The frame assembly (1) according to claim 1, wherein the pillar (5) is configured to rotate between a first position and a second position.

3. The frame assembly (1) according to claim 2, wherein when pillar (5) is rotated from its first position to its second position, the link (6) rotates the upper frame (2) from its first position to its second position, and vice versa.

4. The frame assembly (1) according to any one of claims 1 to 3, wherein
the locking means comprise a first part and a second part that engage with each other, the first part being located on the upper frame (3) or link (6), and the second part being located on the pillar.

5. The frame assembly (1) according to any one of claims 1 to 4, further comprising:
a handle (8) connected to the pillar (5) and extending in a lateral direction of the frame assembly.

6. The frame assembly (1) according to any one of claims 1 to 4, further comprising:
a second pillar (5), each of the pillars being located on a respective side of the frame assembly.

7. The frame assembly (1) according to claim 6, further comprising:
a handle (8) that spans between the pillars (5).

8. The frame assembly (1) according to any one of claims 1 to 7, wherein
the bottom frame (2) comprises a first frame section (21) and a second frame section (22), at least part of the second frame section (22) being located below the first frame section (21) in the height direction of the frame assembly.

9. The frame assembly (1) according to claim 8, wherein
the at least part of second frame section (22) supports a seat or floor (9) for passenger.

10. The frame assembly (1) according to any one of claims 1 to 9, wherein
the bottom frame (2) comprises an attachment (10) for a stroller wheel and/or an attachment (11) for a trailer arm.

11. The frame assembly (1) according to any one of claims 1 to 10, wherein
the front end portions of the upper and bottom frames (3, 2) define an opening in the first position of the upper frame (3).

12. The frame assembly (1) according to any one of claims 1 to 11, wherein
the front end portions of the upper and bottom frames (3, 2) are shaped to curve so as to approach each other, and/or
the rear end portions of the upper and bottom frames (3, 2) are shaped to curve so as to approach each other.

13. A bike trailer comprising:
a frame assembly (1) according to any one of claims 1 to 12; and
a trailer arm coupled to the bottom frame.

14. A stroller comprising:
a frame assembly (1) according to any one of claims 1 to 12;
a stroller wheel coupled to the bottom frame.

15. A multi-functional wheeled carriage comprising:
a frame assembly (1) according to any one of claims 1 to 12; and
a trailer arm and a stroller wheel selectably coupled to the bottom frame.

## Patentansprüche

1. Rahmenbaugruppe (1) für einen Rollwagen, umfassend:
einen unteren Rahmen (2) mit einem vorderen und einem hinteren Ende;
einen oberen Rahmen (3) mit einem vorderen und einem hinteren Ende;
ein Gelenk (4), welches das hintere Ende des oberen Rahmens (3) und das hintere Ende des unteren Rahmens (2) schwenkbar verbindet, sodass sich der obere Rahmen (3) um die Achse des Gelenks und zwischen einer ersten und einer zweiten Position relativ zum unteren Rahmen (2) drehen kann;
eine Säule (5), welche sich vom unteren Rahmen (2) von einer Position zwischen dem vorderen und dem hinteren Ende des unteren Rahmens in Richtung des oberen Rahmens (3) zwischen dem vorderen und dem hinteren Ende des oberen Rahmens (3) erstreckt, wobei mindestens ein Teil der Säule (5) relativ zum unteren Rahmen (2) drehbar ist;
ein Verbindungsglied (6), welches die Säule (5) und den oberen Rahmen (3) so verbindet, dass sich der obere Rahmen (3) um die Achse des Gelenks (4) dreht, wenn die Säule (5) gedreht wird; und
eine Verriegelungseinrichtung zum lösbaren Verriegeln einer Ausrichtung der Säule (5), einer Ausrichtung des oberen Rahmens (2) und/oder einer Ausrichtung des Verbindungsglieds (6), sodass der obere Rahmen (3) in der ersten Position gehalten wird,
wobei in der ersten Position des oberen Rahmens (3) die Rahmenanordnung (1) ausgeklappt und in der zweiten Position des oberen Rahmens (3) eingeklappt ist.

2. Rahmenanordnung (1) nach Anspruch 1, wobei die Säule (5) zwischen einer ersten und einer zweiten Position drehbar ist.

3. Rahmenanordnung (1) nach Anspruch 2, wobei beim Drehen der Säule (5) von ihrer ersten in ihre zweite Position das Verbindungsglied (6) den oberen Rahmen (2) von seiner ersten in seine zweite Position dreht und umgekehrt.

4. Rahmenanordnung (1) nach einem der Ansprüche 1 bis 3, wobei
die Verriegelungseinrichtung einen ersten und einen zweiten Teil umfasst, die miteinander in Eingriff stehen, wobei der erste Teil am oberen Rahmen (3) oder am Verbindungsglied (6) und der zweite Teil an der Säule angeordnet ist.

5. Rahmenanordnung (1) nach einem der Ansprüche 1 bis 4, ferner umfassend:
einen Handgriff (8), der mit der Säule (5) verbunden ist und sich seitlich über die Rahmenanordnung erstreckt.

6. Rahmenanordnung (1) nach einem der Ansprüche 1 bis 4, ferner umfassend:
eine zweite Säule (5), wobei jede der Säulen jeweils auf einer Seite der Rahmenanordnung angeordnet ist.

7. Rahmenanordnung (1) nach Anspruch 6, ferner umfassend:
einen Handgriff (8), der sich zwischen den Säulen (5) erstreckt.

8. Rahmenanordnung (1) nach einem der Ansprüche 1 bis 7, wobei
der untere Rahmen (2) ein erstes Rahmensegment (21) und ein zweites Rahmensegment (22) umfasst, wobei sich mindestens ein Teil des zweiten Rahmensegments (22) in Höhenrichtung der Rahmenanordnung unterhalb des ersten Rahmensegments (21) befindet.

9. Rahmenanordnung (1) nach Anspruch 8, wobei
mindestens ein Teil des zweiten Rahmensegments (22) einen Sitz oder Boden (9) für einen Fahrgast trägt.

10. Rahmenanordnung (1) nach einem der Ansprüche 1 bis 9, wobei
der untere Rahmen (2) eine Befestigung (10) für ein Kinderwagenrad und/oder eine Befestigung (11) für einen Anhängerarm umfasst.

11. Rahmenanordnung (1) nach einem der Ansprüche 1 bis 10, wobei
die vorderen Endabschnitte des oberen und des unteren Rahmens (3, 2) in der ersten Position des oberen Rahmens (3) eine Öffnung bilden.

12. Rahmenanordnung (1) nach einem der Ansprüche 1 bis 11, wobei
die vorderen Endabschnitte des oberen und des unteren Rahmens (3, 2) so kurvig geformt sind, dass sie sich einander annähern, und/oder
die hinteren Endabschnitte des oberen und des unteren Rahmens (3, 2) so kurvig geformt sind, dass sie sich einander annähern.

13. Fahrradanhänger, umfassend:
eine Rahmenanordnung (1) nach einem der Ansprüche 1 bis 12; und
einen Anhängerarm, der mit dem unteren Rahmen verbunden ist.

14. Kinderwagen, umfassend:
eine Rahmenanordnung (1) nach einem der Ansprüche 1 bis 12; und
ein Kinderwagenrad, das mit dem unteren Rahmen verbunden ist.

15. Multifunktionswagen, umfassend:
eine Rahmenanordnung (1) nach einem der Ansprüche 1 bis 12; und
einen Anhängerarm und ein Kinderwagenrad, die wahlweise mit dem unteren Rahmen verbunden sind.

## Revendications

1. Ensemble châssis (1) pour chariot à roues, comprenant :
un châssis inférieur (2) ayant une extrémité avant et une extrémité arrière ;
un châssis supérieur (3) ayant une extrémité avant et une extrémité arrière ;
une articulation (4) couplant de manière pivotante l'extrémité arrière du châssis supérieur (3) et l'extrémité arrière du châssis inférieur (2) de sorte que le châssis supérieur (3) tourne autour d'un axe de l'articulation et entre une première position et une deuxième position par rapport au châssis inférieur (2) ;
un montant (5) s'étendant depuis le châssis inférieur (2), depuis une position située entre l'extrémité avant et l'extrémité arrière du châssis inférieur, vers le châssis supérieur (3) entre l'extrémité avant et l'extrémité arrière du châssis supérieur (3), au moins une partie du montant (5) pouvant tourner par rapport au châssis inférieur (2) ;
un élément de liaison (6) couplant le montant (5) et le châssis supérieur (3) de manière à faire tourner le châssis supérieur (3) autour de l'axe de l'articulation (4) lorsque le montant (5) est tourné ; et
un moyen de verrouillage pour verrouiller de manière libérable une orientation du montant (5), une orientation du châssis supérieur (3) et/ou une orientation de l'élément de liaison (6) de telle sorte que le châssis supérieur (3) soit maintenu dans la première position,
dans lequel, dans la première position du châssis supérieur (3), l'ensemble châssis (1) est déplié, et dans la deuxième position du châssis supérieur (3), l'ensemble châssis (1) est replié.

2. Ensemble châssis (1) selon la revendication 1, dans lequel le montant (5) est configuré pour tourner entre une première position et une deuxième position.

3. Ensemble châssis (1) selon la revendication 2, dans lequel, lorsque le montant (5) est tourné de sa première position vers sa deuxième position, l'élément de liaison (6) fait tourner le châssis supérieur (2) de sa première position vers sa deuxième position, et vice versa.

4. Ensemble châssis (1) selon l'une quelconque des revendications 1 à 3, dans lequel
le moyen de verrouillage comprend une première partie et une deuxième partie qui s'engagent l'une avec l'autre, la première partie étant située sur le châssis supérieur (3) ou l'élément de liaison (6), et la deuxième partie étant située sur le montant.

5. Ensemble châssis (1) selon l'une quelconque des revendications 1 à 4, comprenant en outre :
une poignée (8) reliée au montant (5) et s'étendant dans une direction latérale de l'ensemble châssis.

6. Ensemble châssis (1) selon l'une quelconque des revendications 1 à 4, comprenant en outre :
un deuxième montant (5), chacun des montants étant situé sur un côté respectif de l'ensemble châssis.

7. Ensemble châssis (1) selon la revendication 6, comprenant en outre :
une poignée (8) qui s'étend entre les montants (5).

8. Ensemble châssis (1) selon l'une quelconque des revendications 1 à 7, dans lequel
le châssis inférieur (2) comprend une première section de châssis (21) et une deuxième section de châssis (22), au moins une partie de la deuxième section de châssis (22) étant située en dessous de la première section de châssis (21) dans la direction de hauteur de l'ensemble châssis.

9. Ensemble châssis (1) selon la revendication 8, dans lequel
ladite au moins une partie de la deuxième section de châssis (22) supporte un siège ou un plancher (9) pour un passager.

10. Ensemble châssis (1) selon l'une quelconque des revendications 1 à 9, dans lequel
le châssis inférieur (2) comprend une fixation (10) pour une roue de poussette et/ou une fixation (11) pour un bras de remorque.

11. Ensemble châssis (1) selon l'une quelconque des revendications 1 à 10, dans lequel
les parties d'extrémité avant des châssis supérieur et inférieur (3, 2) définissent une ouverture dans la première position du châssis supérieur (3).

12. Ensemble châssis (1) selon l'une quelconque des revendications 1 à 11, dans lequel
les parties d'extrémité avant des châssis supérieur et inférieur (3, 2) sont formées de manière à s'incurver pour se rapprocher l'une de l'autre, et/ou
les parties d'extrémité arrière des châssis supérieur et inférieur (3, 2) sont formées de manière à s'incurver pour se rapprocher l'une de l'autre.

13. Remorque de vélo comprenant :
un ensemble châssis (1) selon l'une quelconque des revendications 1 à 12 ; et
un bras de remorque couplé au châssis inférieur.

14. Poussette comprenant :
un ensemble châssis (1) selon l'une quelconque des revendications 1 à 12 ;
une roue de poussette couplée au châssis inférieur.

15. Chariot à roues multifonctionnel comprenant :
un ensemble châssis (1) selon l'une quelconque des revendications 1 à 12 ; et
un bras de remorque et une roue de poussette pouvant être couplés de manière sélective au châssis inférieur.
